# EUROPÄISCHE PATENTANMELDUNG

(11) **EP 1 059 767 A2**
(43) Veröffentlichungstag der Anmeldung: **13.12.2000**
(21) Anmeldenummer: 00890187.8
(22) Anmeldetag: 08.06.2000
(51) Int. Cl.: H04L 12/24

(54) **Einrichtung zur Herstellung von Verbindungen zwischen Endstellen und Endgeräten mit einem oder mehreren Netzwerken**

(30) Priorität: 11.06.1999 AT 103599
(71) Anmelder: Blohberger, Franz, 4030 Linz (AT); Pizka, Wolfgang, 4030 Linz (AT); Niederhametner, Diemtar, 4040 Linz (AT)
(72) Erfinder: Blohberger, Franz, 4030 Linz (AT); Pizka, Wolfgang, 4030 Linz (AT); Niederhametner, Diemtar, 4040 Linz (AT)
(74) Vertreter: Hübscher, Helmut, Dipl.-Ing.

(57) **Zusammenfassung**

Bei einer Einrichtung zur Herstellung von Verbindungen zwischen Endstellen (6) und Endgeräten mit einem oder mehreren Netzwerken (1), die je ein oder mehrere Signale für unterschiedliche Anwendungsbereiche führen, werden Schnittstellen zur Ankopplung an das bzw. die Netzwerke (1) und mit den Endstellen bzw. Endgeräten (6) verbundene Ein- bzw. Ausgänge (4) eingesetzt. Es ist eine zentrale Steuereinheit (2) des Netzwerkes (1), insbesondere ein Computer, vorgesehen und den Ein- bzw. Ausgängen (6) bzw. Gruppen von Ausgängen wird ein über die zentrale Steuereinheit (2) frei programmierbarer Mikrocontroller (8) zugeordnet, der die Zugriffsberechtigung und die zulässige Zugriffsart der einzelnen Ein- und Ausgänge (6) zum jeweiligen Netzwerk, nämlich den Zugriff zum Datenfluß und bzw. oder die Eingabemöglichkeit in das Netzwerk individuell bestimmt und entsprechend seiner gespeicherten Software die zugeordneten Schnittstellen bzw. eine Splittelektronik (11) und Auswahlfilter (10) ansteuert und initialisiert.

## Beschreibung

Die Erfindung betrifft eine Einrichtung zur Herstellung von Verbindungen zwischen Endstellen und Endgeräten mit einem oder mehreren Netzwerken, die je ein oder mehrere Signale für unterschiedliche Anwendungsbereiche führen, mit Schnittstellen zur Ankopplung an das bzw. die Netzwerke und mit den Endstellen bzw. Endgeräten verbundenen Ein- bzw. Ausgängen.

Netzwerke, mit denen eine Verbindung hergestellt werden soll, sind u. a. das bekannte Internet, Intranet, Infranet und weitere eine Vielzahl von Daten bzw. Signalen führende Netze; Ferner verschiedene Netze für die Telekommunikation, mit Energieübertragungssystemen gekoppelte Kommunikations- oder Steuersysteme und schließlich verschiedene Arten von Überwachungssystemen.

Bisher werden für die Herstellung von Verbindungen üblicherweise auf den jeweiligen Anwender abgestimmte Verbindungseinrichtungen eingesetzt. Dazu zählen mit Schnittstellen zur Netzankopplung kombinierte Filter und Signalsplitteinrichtungen, durch die anwenderspezifisch beim Anwender selbst aus der vom Netzwerk geführten Datenvielfalt die für den Anwender benötigten Signale bzw. jene Signale, für die der Anwender eine Zugriffsberechtigung hat, ausgewählt werden. Es ist daher notwendig, bei jeder Änderung der Zugriffsberechtigung bzw. bei Inanspruchnahme bzw. Bereitstellung weiterer Dienstleistungen aus dem bzw. den Netzwerken beim Anwender selbst neue Geräte zu installieren oder bestehende Geräte entsprechend zu ergänzen. Je nach Art der Zugriffsberechtigung (z. B. einer Identifikationsadresse) bzw. der beanspruchten

Dienstleistung werden Sondergeräte eingesetzt, so daß sich für die verschiedensten Anwendungsgebiete eine Vielfalt an unterschiedlichen Verbindungseinrichtungen ergibt. Unterschiede ergeben sich auch, ob zwischen den Endstellen und dem Netzwerk Simplex- oder Duplexverbindungen hergestellt werden sollen. Eine Duplexverbindung ist vorhanden, wenn zwischen Netzwerk und Endstelle bzw. zwischen zwei Endstellen sowohl Sende- als auch Empfangsverbindungen herzustellen sind. Eine Simplexverbindung gestattet den Datenfluß nur in einer Richtung, wie dies z. B. bei Rundfunk- oder Fernsehübertragungen der Fall ist. Weitere Verbindungsarten sind sogenannte Halbduplexverbindungen, die wahlweise in beiden Richtungen, aber jeweils nur in einer von Ihnen betrieben werden können. Selbstverständlich müssen die einzelnen der Ankopplung dienenden Schnittstellen an die Art der Datenübertragung selbst angepaßt sein. Sie unterscheiden sich also hinsichtlich der Form der Datenübertragung und der Art der Ankopplung, z. B. in Form von parallelen oder seriellen Schnittstellen.

Aufgabe der Erfindung ist die Schaffung einer Einrichtung der eingangs genannten Art, die an die verschiedensten Netzwerke und Übertragungsnetze anpaßbar ist und bei einheitlichem Grundaufbau für die einzelnen Anwender verschiedenste Zugriffs- und Verbindungsarten ermöglicht, wobei Änderungen und Erweiterungen in den Zugriffs- und Verbindungsberechtigungen bzw. -möglichkeiten einfach und ohne Änderungen des Systemaufbaues der Einrichtung selbst durchführbar sein sollen.

Die gestellte Aufgabe wird prinzipiell dadurch gelöst, daß eine zentrale Steuereinheit des Netzwerkes, insbesondere ein Computer, vorgesehen und den Ein- bzw. Ausgängen bzw. Gruppen von Ausgängen ein über die zentrale Steuereinheit frei programmierbarer Mikrocontroller (µC) zugeordnet ist, der die Zugriffsberechtigung und die zulässige Zugriffsart der einzelnen Ein- und Ausgänge zum jeweiligen Netzwerk, nämlich den Zugriff zum Datenfluß und bzw. oder die Eingabemöglichkeit in das Netzwerk individuell bestimmt und entsprechend seiner gespeicherten Software die zugeordneten Schnittstellen bzw. eine Splittelektronik und Auswahlfilter ansteuert und initialisiert.

Es wird daher möglich, jedem Ein- bzw. Ausgang individuell eine Zugriffsberechtigung bzw. -möglichkeit zu dem bzw. den Netzwerken zuzuordnen, neue Ein- bzw. Ausgänge zu initialisieren und auch interaktive Verbindungen im vorhandenen Netzwerk bzw. in ankoppelbaren Netzwerken oder sonstigen Übertragungseinrichtungen zu ermöglichen. Der Mikrocontroller und die in seinem Speicher festgehaltene Steuersoftware bestimmen im wesentlichen die "Intelligenz" der jeweiligen Verbindungseinrichtung, wobei durch die gespeicherte Steuersoftware eine Vielzahl von Anschlußaufgaben erfüllt werden kann bzw. im Extremfall sogar alle anfallenden Steuerungs- bzw. Verbindungsbedürfnisse befriedigt werden können (z. B. Identifikationsadresse). Die Eingänge in die Einrichtung sowie die zu den Endstellen bzw. Endgeräten führenden Ein-/Ausgänge können ebenso wie vorhandene Splitteinrichtungen individuell an das jeweilige Netzwerk bzw. die Anschlußgeräte angepaßt werden.

Nach einer bevorzugten Ausführungsform ist der Mikrocontroller (µC) mit dem von ihm initialisierbaren Ausgängen, Schnittstellen, der Splittelektronik und den gegebenenfalls vorgesehenen Auswahlfiltern zu einer gemeinsamen Baugruppe in Form eines externen Anschaltgerätes oder eines An- oder Einbausatzes für die insbesondere als PC ausgebildete zentrale Steuereinheit ausgeführt. Dabei empfiehlt sich eine Ausführung, nach der die Baugruppe als erweiterbarer Steckkartensatz für den die zentrale Steuereinheit bildenden PC ausgebildet ist, da hier das Grundgerät einfach erweitert und ergänzt werden kann.

Um weitere Kommunikations- und Steuermöglichkeiten zu schaffen, kann ein Netzwerk über bestehende Übertragungsmedien, z. B. ein Fernnetz, Internet, Telekommunikationsnetz oder Energieversorgungsnetz mit anwählbaren weiteren Netzwerken bzw. geschlossenen Netz- oder Bussystemen verbindbar sein. Schließlich kann man auch vorsehen, anwählbare Aus-/Eingänge mit Modems zur Fernübertragung auszustatten.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig.1: als einfaches Schema zur Erläuterung der Erfindung zwei miteinander verbundene Netzwerke mit der zugehörigen Steuereinheit und den Endstellen bzw. Endgeräten,
- Fig.2: den den Mikrocontroller enthaltenden Bausatz im Aufbauschema und
- Fig.3: ein weiteres Schema zur Erläuterung des Erfindungsgedankens.

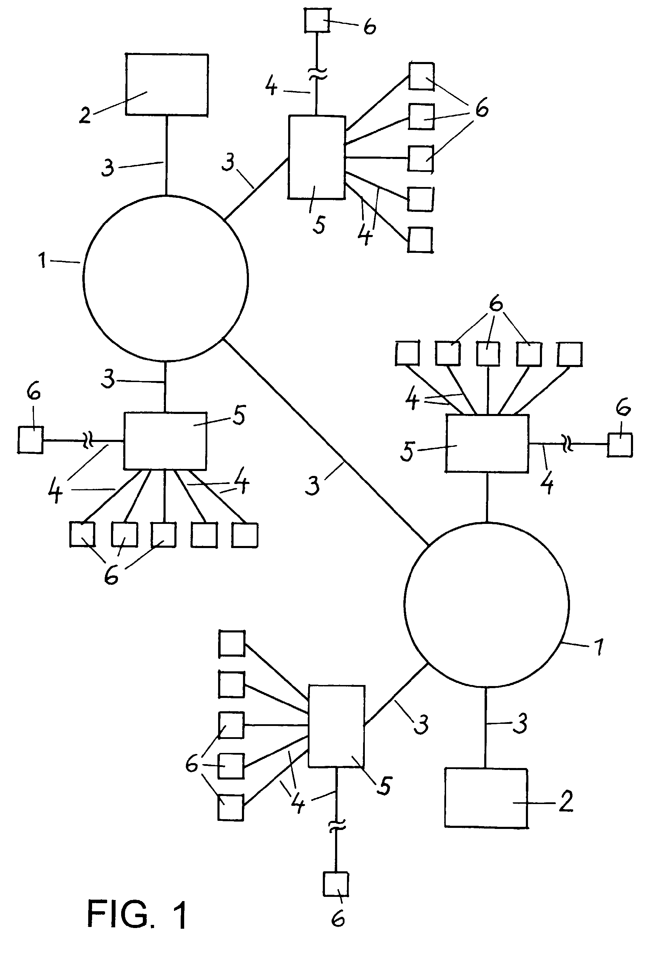

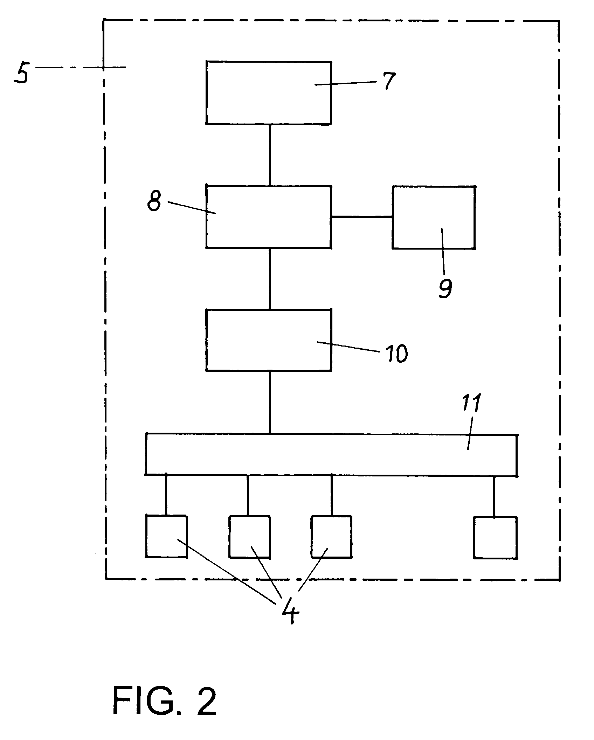

Für jedes der beiden Netzwerke 1 ist nach Fig. 1 eine zentrale Steuereinheit 2, z. B. ein Computer, der ein Server, ein PC, eine Workstation od. dgl. sein kann, vorgesehen. Die beiden Netzwerke 1 sind untereinander und mit Verteilereinrichtungen 5 über ein von der Art des Netzwerkes und den vorhandenen Übertragungsmöglichkeiten abhängiges Übertragungsmedium 3 verbunden. An die Verteilereinrichtung 5 schließen über frei programmierbare Aus-/Eingänge 4, Endgeräte oder Endstellen 6 an. Beim Ausführungsbeispiel nach den Fig. 1 und 2 wurde der Einfachheit halber und wegen der besseren Übersicht angenommen, daß die Verteilereinrichtungen 5 den Aufbau nach Fig. 2 aufweisen. Danach hat jede Verteilereinrichtung Eingangsschnittstellen 7, die frei gestaltbar bzw. entsprechend der Technik im jeweiligen Netz vorhanden sind. Herz des Gerätes, der es zu einem "intelligenten" Gerät macht, ist ein Mikrocontroller 8, der in einem Speicher 9 Steuersoftware gespeichert hat und der von der zentralen Steuereinheit 2 frei programmierbar ist. Dem Mikrokontroller 8 ist eine digitale Filter- und Auswerteelektronik 10 nachgeordnet, die ihrerseits mit einer Splittelektronik 11 verbunden ist, an welche die Ausgänge 4 anschließen.

Mittels des Computers 2 kann der Mikrocontroller 8 programmiert werden, so daß er für jeden Ausgang 4 frei gestaltbar über die Filter- und Auswerteelektronik 10 bestimmt, welche Signale bzw. Daten über die Splittelektronik 11 jedem einzelnen der Ausgänge 4 zugeführt werden können. Ebenso bestimmt der Mikrocontroller 8, ob eine an einen Ausgang 4 angeschlossene Endstelle 6 auch interaktiv oder lediglich als Eingang, z. B. Steuereingang, dem eine bestimmte Anschlußverbindung im Netz oder in einem angeschlossenen Netz zugeordnet wird, betrieben werden darf.

Beim Ausführungsbeispiel nach den Fig. 1 und 2 wurde die Verteilereinrichtung 5 als gesonderter Bauteil mit Abstand vom Computer 2 dargestellt. Es ist aber auch möglich, die Bauteile 7 - 10 in Form von Steckkarten oder eines Anbaugerätes unmittelbar am Computer 2 vorzusehen und lediglich die Splittelektronik 11 als gesonderten Bauteil zur Verbindung mit den Ausgängen 4 und den Endstellen 6 zu fertigen. Auch die Splittelektronik 11 kann bei anderen Bauform in das Hauptgerät integriert sein, so daß dann vom Hauptgerät alle Ausgänge 4 ausgehen und die Endstellen mit dem Hauptgerät 2 kommunizieren.

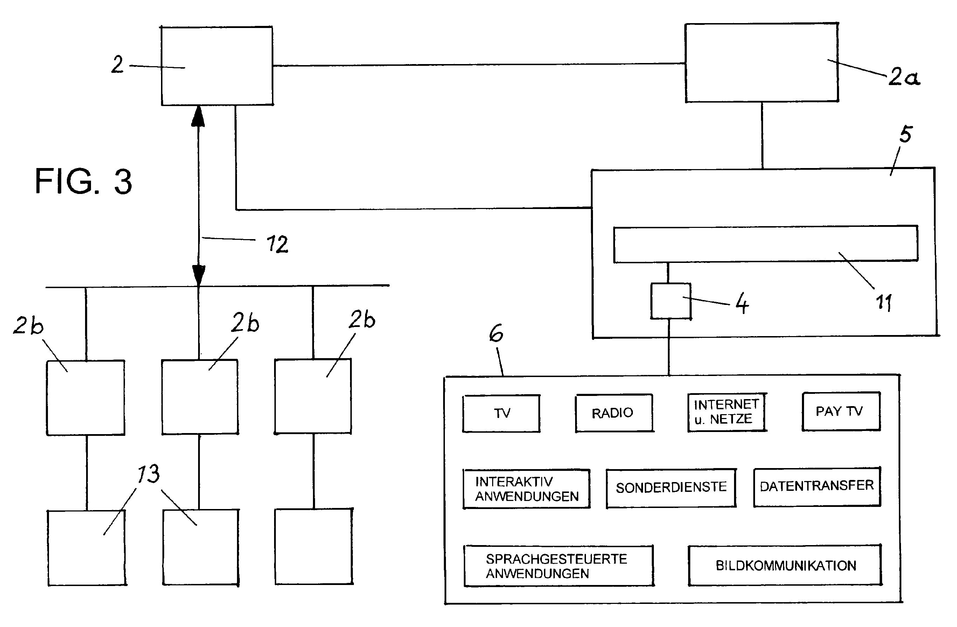

In Fig. 3 ist in detallierterer Form ein weiteres Anwendungsbeispiel veranschaulicht. Dabei wird angenommen, daß ein Hauptnetzwerk vorhanden ist, das von einen Zentralcomputer 2 gesteuert wird und beispielsweise am Internet, Intranet, Infranet oder sonstigen Netz angeschlossen wird. Ein weiterer Computer 2a ist dem Netzwerk zugeordnet und hat Zugriff zum Computer 2 und zu den Verteilereinrichtungen 5, die aber auch mit dem Hauptcomputer 2 verbunden sind. Durch einen Pfeil 12 wurde angedeutet, daß vom Hauptcomputer 2 her auch interaktive Verbindungen mit weiteren, z. B. ebenfalls mit einem Computer ausgestatteten Steuergeräten 2b hergestellt werden können, die ihrerseits selbst Geräte 13 steuern oder von diesen Geräten zusätzlich gesteuert werden. In der mit 6 bezeichneten Gruppe sind mögliche Ausführungen der Endstellen bzw. Endgeräte angedeutet. Je nach Endstellen- bzw. Geräteart sind die Anschlüsse 4 als serielle Schnittstellen, parallele Schnittstellen, Infrarot- Schnittstellen usw. ausgebildet. Die Initialisierung dieser Schnittstellen wird, wie schon erwähnt und vorher beschrieben, vom Mikrocontroller 8 bestimmt, der dabei auch die Filtermethoden zur Auswahl der dem jeweiligen Ausgang zuführbaren Daten und bei interaktivem Betrieb festlegt, welche Signale, z. B. Steuersignale von einem Endgerät eingegeben werden dürfen und mit welchem anderen Ausgang dieses Endgerät zur Übertragung verbunden werden darf. Dabei kann auch festgelegt werden, daß ein Endgerät nach Einlangen eines entsprechenden oder von ihm selbst abgegebenen Steuerbefehls über eine Wähleinrichtung des Netzwerkes mit einem Ausgang in einem anderen Netzwerk oder einer Fernübertragungsstation verbunden wird, die z. B. über Modems die Herstellung einer Verbindung mit einem anwählbaren externen Gerät ermöglicht. Bei der erfindungsgemäßen Ausführung wird es über den Mikrocontroller 8 und die nachgeordneten Einrichtungen 10, 11 möglich, immer neue Dienstleistungen zu integrieren und es können alle Geräte über einen flexibel gestalteten Ausgang angeschlossen werden. Solche Ausgänge können als Koaxialkabel, CU-Kabel, Infrarotübertragungsstrecken, optische oder Glasfaserübertragungsstrecken oder Anschaltungen an ein Funknetz ausgeführt sein. Die schon erwähnten Modems können bis zu einer beliebig großen Bitrate angeschaltet und zur Überbrückung auch großer Entfernungen, im Bedarfsfall zu allen Erdteilen, ausgenützt werden.

Die Verteilereinrichtung 5 kann auch auf Energieübertragungsleitungen zur Signal- und Energietrennung eingesetzt werden. In Fig. 3 wurden lediglich als Ausführungsbeispiel in der Gruppe 6 verschiedene, von den Endstellen nutzbare Dienstleistungen angeführt.

Bei einer Anwendungsform werden an ein Netzwerk 1, das hybrid oder homogen aufgebaut sein kann, aktive oder passive Endgeräte 6 angeschlossen, die mit und ohne intelligente Bauteile ausgeführt und mit einer integrierten Software ausgestattet sein können. Es ist auch die Anschaltung über einen zwischengeschalteten PC oder ein anderes definiertes Medium möglich. Allgemein gesagt kann es sich um ein Stern-, Ring-, Baum- Busnetzwerk oder auch um eine direkte (Point to Point) Verbindungsstruktur handeln. Der Datenfluß kann bidirektion oder unidirektional in allen schon eingangs erwähnten Varianten erfolgen. Sind zwischen den Endstellen 6 fest verdrahtete Leitungen vorhanden, dann kann eine Verbindung entweder permanent bestehen oder bei Bedarf auf- und abgebaut werden.

Die Schnittstellen zwischen dem Netz 1 und der Verteilereinrichtung 5 bzw. zwischen dieser und den Endstellen bzw. Endgeräten 6 können sowohl seriell, parallel, infrarot, elektromagnetisch, als Funkschnittstellen usw. entsprechend dem jeweiligen Stand der Technik ausgeführt werden. Endgeräte 6, die am Netzwerk 1 angeschlossen sind, können von übergeordneten Geräten 2 bzw. von den Endgeräten 6 zugeordneten Computern oder auch von anderen am Netzwerk angeschlossenen Endgeräten 6 gesteuert, abgefragt oder konfiguriert werden. Auch die Möglichkeit, daß ein Teil nur aktiv oder interaktiv an den angebotenen Programmen oder Dienstleistungen teilnimmt ist gegeben. Schließlich können Endgeräte 6 permanent überwacht werden und vom Endgerät her verschiedenste Daten, z. B. die Daten eines Sensores oder eines Meßwertumformers, über das Endgerät zu einem anderen Endgerät bzw. in das Netzwerk und an über dieses anwählbare Endgeräte übertragen werden.

Als Ausführungsbeispiel wird hier angegeben, daß ein Patient mit einem frisch eingesetzten Herzschrittmacher oder sonstigen lebenserhaltenden Mechanismen über eine Schnittstelle mit Funkverbindung mit seinem PC verbunden wird, der seinerseits über die Einrichtung 5 permanent oder auch nur im Falle einer Änderung seines Zustandes mit einem Krankenhaus in Verbindung steht, so daß der Patient vom Krankenhaus verständigt werden kann, wenn Fehler auftreten bzw. im Krankenhaus die notwendigen Vorbereitungen getroffen werden können, um den angerufenen Patienten bei seiner Einlieferung sofort behandeln zu können. Der Herzschrittmacher mit einer erweiterten Elektronik wäre hier eine Endstelle 6, welche über eine gemeinsam genutzte Leitung mit Übertragungsmedium überwacht wird. Wegen der Splitteinrichtungen 11 können Daten übertragen werden, auch wenn über die Verbindungsleitungen gleichzeitig andere Dienste genützt werden. Es soll auch die Möglichkeit bestehen, eine Verbindung ohne Computer aufzubauen bzw. aufrecht zu erhalten.

Nach einem anderen Ausführungsbeispiel wird angenommen, daß im world wide web (Internet) auf einer HTML Seite eine Dienstleistung angeboten wird. Ein Anwender kann durch Auswahl verschiedener Felder Aktionen seines Endgerätes auslösen und auch interaktiv den Vorgang einerseits oder auch beiderseits der Verbindung beeinflussen, während gleichzeitig andere Dienste genutzt werden. Die Auswahl kann auch akustisch erfolgen. Wichtig ist auch hier die mögliche gleichzeitige Nutzung und/oder Steuerung mehrerer Dienste über die Verteilereinrichtung 5 auf demselben Übertragungsmedium bzw. derselben Übertragungsleitung.

## Patentansprüche

1. Einrichtung zur Herstellung von Verbindungen zwischen Endstellen (6) und Endgeräten mit einem oder mehreren Netzwerken (1), die je ein oder mehrere Signale für unterschiedliche Anwendungsbereiche führen, mit Schnittstellen zur Ankopplung an das bzw. die Netzwerke (1) und mit den Endstellen bzw. Endgeräten (6) verbundenen Ein- bzw. Ausgängen (4), dadurch gekennzeichnet, daß eine zentrale Steuereinheit (2) des Netzwerkes (1), insbesondere ein Computer, vorgesehen und den Einbzw. Ausgängen (6) bzw. Gruppen von Ausgängen ein über die zentrale Steuereinheit (2) frei programmierbarer Mikrocontroller (8) zugeordnet ist, der die Zugriffsberechtigung und die zulässige Zugriffsart der einzelnen Ein- und Ausgänge (6) zum jeweiligen Netzwerk, nämlich den Zugriff zum Datenfluß und bzw. oder die Eingabemöglichkeit in das Netzwerk individuell bestimmt und entsprechend seiner gespeicherten Software die zugeordneten Schnittstellen bzw. eine Splittelektronik (11) und Auswahlfilter (10) ansteuert und initialisiert.

2. Einrichtung nach Anspruch 1, dadurch gekennzeichnet, daß der Mikrocontroller (8) mit dem von ihm initialisierbaren Ausgängen (4), Schnittstellen (7), der Splittelektronik (11) und den gegebenenfalls vorgesehenen Auswahlfiltern (10) zu einer gemeinsamen Baugruppe in Form eines externen Anschaltgerätes oder eines An- oder Einbausatzes für die insbesondere als PC ausgebildete zentrale Steuereinheit (2) ausgeführt ist.

3. Einrichtung nach Anspruch 2, dadurch gekennzeichnet, daß die Baugruppe als erweiterbarer Steckkartensatz für den die zentrale Steuereinheit (2) bildenden PC ausgebildet ist.

4. Einrichtung nach einem der Ansprüche 1 bis 3, dadurch gekennzeichnet, daß ein Netzwerk (1) über bestehende Übertragungsmedien (3), z. B. ein Fernnetz, Internet, Telekommunikationsnetz oder Energieversorgungsnetz mit anwählbaren weiteren Netzwerken (1) bzw. geschlossenen Netz- oder Bussystemen verbindbar ist.

5. Einrichtung nach einem der Ansprüche 1 bis 4, dadurch gekennzeichnet, daß anwählbare Aus-/Eingänge (4) mit Modems zur Fernübertragung ausgestattet sind.
